# EUROPÄISCHE PATENTSCHRIFT

(11) **EP 2 228 299 B1**
(45) Veröffentlichungstag und Bekanntmachung des Hinweises auf die Patenterteilung: **29.06.2016**
(21) Anmeldenummer: 10155932.6
(22) Anmeldetag: 09.03.2010
(51) Int. Cl.: B64C 27/46, B64C 27/72

(54) **ANISOTROPE BETÄTIGUNG EINER HELIKOPTERROTORBLATTSPITZE**
ANISOTROPIC ACTUATION OF A HELICOPTER ROTOR BLADE TIP
ACTIONNEMENT ANISOTROPE D'UNE POINTE DE PALE DE ROTOR D'HÉLICOPTÈRE

(30) Priorität: 13.03.2009 DE 102009012801
(43) Veröffentlichungstag der Anmeldung: 15.09.2010
(73) Patentinhaber: Airbus Defence and Space GmbH, 85521 Ottobrunn (DE)
(72) Erfinder: Grohmann, Boris, 82024 Taufkirchen (DE); Storm, Stefan, 85716 Unterschleissheim (DE)
(74) Vertreter: Isarpatent

(56) Entgegenhaltungen:
- DE-C1- 19 528 155
- FR-A1- 2 833 571
- US-A- 4 046 336
- US-A1- 2006 027 703
- BAEDER J D: "PASSIVE DESIGN FOR REDUCTION OF HIGH-SPEED IMPULSIVE ROTOR NOISE", JOURNAL OF THE AMERICAN HELICOPTER SOCIETY, AMERICAN HELICOPTER SOCIETY, ALEXANDRIA, VA, US, Bd. 43, Nr. 3, 1. Juli 1998 (1998-07-01), Seiten 222-234, XP000771270, ISSN: 0002-8711, DOI: 10.4050/JAHS.43.222

## Beschreibung

### Gebiet der Erfindung

Die vorliegende Erfindung betrifft ein Rotorblatt für einen Helikopter und insbesondere ein Rotorblatt für einen Helikopter mit einer gepfeilten Rotorblattspitze mit Aktuatoren.

### Hintergrund der Erfindung

Rotorblätter von Helikoptern beziehungsweise Drehflüglern durchlaufen bedingt durch die Rotation zyklisch unterschiedliche Zustände einer Anströmung, insbesondere beim Fortbewegungsflug. Dabei bewegt sich eine Anströmkante teilweise gegen die anströmende Luft beziehungsweise nach einer Drehung um 180° mit der anströmenden Luft. Ferner sind die Strömungsverhältnisse über die Spannweite eines Helikopterrotorblattes unterschiedlich bedingt durch die unterschiedlichen Bahngeschwindigkeiten des Rotors in Abhängigkeit einer Entfernung von der Drehachse. Dies kann dazu führen, dass die Rotorblattspitzen, die im Allgemeinen die höchste Bahngeschwindigkeit aufweisen, nahe der Schallgeschwindigkeit oder sogar darüber bewegt werden, wodurch sich strömungstechnische Besonderheiten ergeben können, die nicht nur zu einer sich verändernden Aerodynamik sondern auch zu einer erhöhten Geräusch- beziehungsweise Lärmentwicklung führen können.

Die US 2006/027703 A1 beschreibt ein Rotorsystem mit einer verbesserten Rotorspitze. Die FR 2 833 571 A1 beschreibt ein aerodynamisches Flügelprofil. Die DE 195 28 155 C1 beschreibt ein verdrehbares Rotorblatt.

Die Druckschrift von J. D. Baeder, mit dem Titel "Passive Design for Reduction of High-Speed Impulsive Rotor Noise ", erschienen in "Journal of the American Helicopter Society ", Ausgabe 43 (3), am 1. Juli 1998, beschreibt ein passives Rotorblattdesign.

Aus dem Stand der Technik ist beispielsweise aus DE 103 04 530 B4 ein verformbares aerodynamisches Profil bekannt, bei dem ein vorderer Profilbereich sowie ein in der Abströmung liegender hinterer Profilbereich vorgesehen ist, der durch eine Deckhaut begrenzt ist. Das Profil ist für eine Verformung mittels Piezoaktuatoren vorgesehen, um die Geometrie der Deckhaut zu verändern, um auf diese Weise ein verändertes aerodynamische Profil bereitstellen zu können.

Vor dem Hintergrund dieses Standes der Technik besteht jedoch nach wie vor die Problematik, dass im Bereich einer Rotorblattspitze sehr hohe Strömungsgeschwindigkeiten auftreten können, die zu einer erhöhten Geräuschentwicklung und einer aerodynamischen Störung führen können.

### Zusammenfassung der Erfindung

Es kann als eine Aufgabe der vorliegenden Erfindung betrachtet werden, ein Rotorblatt für einen Helikopter bereitzustellen, das ein verbessertes aerodynamisches Verhalten insbesondere an der Blattspitze aufweist, um somit beispielsweise eine geringeren Geräuschentwicklung und damit geringere Verlust aufweisen kann.

Die Aufgabe der vorliegenden Erfindung wird gelöst durch den Gegenstand der unabhängigen Ansprüche, wobei beispielhafte Ausführungsformen in den abhängigen Ansprüchen verkörpert sind.

Gemäß einer beispielhaften Ausführungsform der Erfindung wird ein Rotorblatt für einen Helikopter bereitgestellt mit einer Blattwurzel, einem Blattspitzenbereich, einer Anströmkante und einer Abströmkante, wobei im Blattspitzenbereich sich die Anströmkante zu einer Drehrichtung zugewandt und die Abströmkante von der Drehrichtung abgewandt befindet, wobei die Anströmkante im Blattspitzenbereich eine Neigung zu einer Längserstreckungsrichtung des Rotorblattes bezüglich der Drehrichtung aufweist, wobei in einem Bereich an der Abströmkante im Blattspitzenbereich eine Aktuatoranordnung angeordnet ist, die ausgelegt ist, um den Blattspitzenbereich in einem Bereich der Abströmkante geometrisch zu verformen, wobei die Aktuatoranordnung einen ersten Aktuator, einen zweiten Aktuator und einen dritten Aktuator aufweist, wobei der erste Aktuator in einem im Bereich der Rotorblattspitze liegenden ersten Bereich angeordnet ist, wobei eine Längenänderungsrichtung des ersten Aktuators im Wesentlichen in eine Spannweitenrichtung verläuft, wobei der zweite Aktuator in einem bezüglich des ersten Bereiches in Richtung einer Rotorblattwurzel liegenden zweiten Bereich angeordnet ist, wobei eine Längenänderungsrichtung des zweiten Aktuators im Wesentlichen in eine Richtung quer zur Längserstreckungsrichtung in einer Drehebene verläuft, und wobei der dritte Aktuator mit zwei quer zueinander liegenden geschichteten Längenänderungsrichtungen ausgestaltet ist und in einem zwischen dem ersten Bereich und dem zweiten Bereich liegenden dritten Bereich angeordnet ist.

Auf diese Weise kann eine Aktuatoranordnung bereitgestellt werden, die im Bereich der äußersten Blattspitze die Applikationsfläche bezüglich der Längserstreckungsrichtung krümmt, während in einem weiter zur Rotorblattwurzel liegenden Bereich die Krümmung bezüglich der Drehrichtung erfolgt. Durch die quer zueinander liegenden Längenänderungsrichtungen des Aktuators in einem dazwischen liegenden Bereich kann eine tordierende Verformung erreicht werden, so dass ein kontinuierlicher Übergang zwischen dem ersten Bereich und dem zweiten Bereich erfolgen kann. Auf diese Weise kann eine dreidimensionale Verformung der Applikationsfläche im Bereich der Abströmkante erreicht werden, wodurch sich eine verbesserte und optimiertere Strömungsgeometrie bezüglich einer gepfeilten Rotorblattspitze ergibt.

Durch eine Neigung der Anströmkante bezüglich der Längserstreckungsrichtung wird eine so genannte Pfeilung der Anströmkante erreicht, die zu einer Veränderung des Strömungsverhaltens führt. Durch eine Pfeilung einer Anströmkante kann ein kontrolliertes Abfließen der an der Angriffsfläche des Rotorblattes gestauten Luft erfolgen, wodurch sich die effektive Anströmungsgeschwindigkeit bzw. die effektive Machzahl reduzieren. Während sich dadurch unter Umständen der Auftrieb verringern kann, wird dadurch erreicht, dass die Belastung an einer Rotorblattspitze verringert werden kann, insbesondere da die Rotorblattspitze der Teil eines Helikopterrotors ist, der die höchste fluiddynamische Belastung erfährt. Durch eine Aktuatoranordnung kann eine Blattdecke eines Rotorblattes insbesondere im Bereich der Pfeilung derart verändert werden, dass eine Anströmung des gepfeilten Bereiches beeinflusst werden kann. Auf diese Weise können beispielsweise Vibrationen oder Verdichtungsstöße reduziert werden, wodurch sich eine geringere Materialbeanspruchung, niedrigere Lärmentwicklung (z.B. sogenannter "high-speed impulsive noise" HSI), reduzierte Vibrationen, verringerter aerodynamischer Widerstand und ein ökonomischerer Flugbetrieb erreichen lassen.

Eine Pfeilung beziehungsweise eine Neigung der Anströmkante in Bezug auf die Längserstreckungsrichtung des Rotorblattes in bezug auf die Drehrichtung kann weiterhin in Wechselwirkung mit der Aktuatoranordnung dabei je nach Stärke und Richtung der Pfeilung (auf die Drehrichtung zu entsprechend einer vorwärtigen Pfeilung oder von der Drehrichtung weg entsprechedn einer rückwärtigen Pfeilung) zu einem so genannten Servo-Effekt beziehungsweise alternativ zu einem Direct-Lift-Effekt führen. Dabei verstärkt eine rückwärtige Pfeilung den Servo-Effekt, während eine vorwärtige Pfeilung tendenziell zu einem Direct-Lift-Effekt führt. Durch das Bereitstellen eines Aktuators im Bereich einer Abströmkante kann ein aerodynamisches Nickmoment verändert werden, so dass in Kombination mit einer entsprechenden Pfeilung ein Moment um eine Längserstreckungsachse des Rotorblattes verändert werden kann, um auf diese Weise Einfluss auf die aerodynamischen und mechanischen Eigenschaften der Rotorblattspitze zu nehmen. Bei Rückwärtspfeilung vergrößert sich dabei tendentiell der Hebelarm des Kräftemittelpunkts der aerodynamischen Wirkung (=Auftriebsänderung) bei ausgeschlagener Aktuatoranordnung zur elastischen Torsionsachse und es verstärkt sich der Servoeffekt. Entsprechend verkleinert Vorwärtspfeilung tendenziell den Hebelarm des Kräftemittelpunkts der aerodynamischen Wirkung (=Auftriebsänderung) bei ausgeschlagener Aktuatoranordnung zur elastischen Torsionsachse und es verkleinert sich der Servoeffekt, d.h. der Direct-Lift Effekt überwiegt stärker.

Durch geschickte Wahl der Pfeilung in Kombination mit der Aktuatoranordnung können vier Wirkungen gemeinsam gezielt beeinflusst werden:
1. Die Pfeilung der Blattspitze verbessert generell die Aerodynamik am vorlaufenden Blatt aufgrund hoher Anström-Machzahl (cos-β Effekt)
2. Die Blatt- bzw. Profiltiefe im Bereich der Aktuatoranordnung beeinflusst die aerodynamische Wirksamkeit unmittelbar über die wirksame aerodynamische Fläche
3. Mehr Vorwärtspfeilung schwächt den aerodynamischen Servo-Effekt ab der Aktuatoranordnung; mehr Rückwertspfeilung verstärkt den aerodynamischen Servo-Effekt der Aktuatoranordnung
4. im vorwärtsgepfeilten Nasenbereich kann bei großem Abstand von der Massenschwerpunktachse eine Kammer für Ausgleichsmassen vorgesehen werden, um die Masse der Aktuatoranordnung, die hinter den elastischen Biege- bzw. Torsionsachsen zu liegen kommt, auszugleichen. Durch den großen Hebelarm der Kammer in der vorwärtsgepfeilten Nase gegenüber der Massenschwerpunktachse sind nur geringe Ausgleichsmassen mit wenig schädlicher Zusatzmasse notwendig.

Gemäß einer beispielhaften Ausführungsform ist die Aktuatoranordnung ausgelegt, um einen Bereich an der Abströmkante von einer ersten Position in eine zweite Position vertikal, d.h. orthogonal zu sowohl der Längserstreckungsrichtung als auch der Drehrichtung zu bewegen.

Durch eine vertikale Auslenkung eines Bereiches an der Abströmkante kann gezielt ein Auftrieb beziehungsweise ein Abtrieb im Bereich der Rotorblattspitze erreicht werden, wodurch sich das aerodynamische Verhalten der Rotorblattspitze aktiv beeinflussen lässt, je nach Betriebsbedingungen der Rotorblattspitze beziehungsweise des Flugbetriebes.

Gemäß einer beispielhaften Ausführungsform der Erfindung stellt die Neigung der Anströmkante im Bereich der Blattspitze eine gepfeilte Nase der Blattspitze dar.

Gemäß einer beispielhaften Ausführungsform der Erfindung weist die Anströmkante eine Neigung entgegen der Drehrichtung auf.

Auf diese Weise wird ermöglicht, dass durch eine rückwärtige Pfeilung der sich einstellende Staudruck im Bereich der Rotorblattspitze seitlich radial nach außen abgeleitet werden kann, wodurch sich die Belastung der Rotorblattspitze verringert.

Diese Reduktion der effektiven Anströmungsgeschwindigkeit bzw. der effektiven Machzahl durch Pfeilung ist als cos-β-Effekt bekannt.

Gemäß einer beispielhaften Ausführungsform der Erfindung weist die Abströmkante eine Neigung entgegen der Drehrichtung auf.

Auf diese Weise wird im Bereich der Abströmkante eine größere Fläche bereitgestellt, die zur Applikation einer Aktuatoranordnung zur Verfügung steht. Das Rotorblatt kann dabei im Bereich des Blattspitzenbereiches eine Blattspitzenkante aufweisen, die die Anströmkante und die Abströmkante miteinander verbindet. Diese Blattspitzenkante kann dabei im Wesentlichen in Richtung der Drehrichtung laufen, wobei sich dabei über die gesamte Blattlänge bis hin zum Spitzenbereich eine im Wesentlichen konstante Tiefe des Rotorblattprofils einstellt. Die Blattspitzenkante kann jedoch auch in Richtung der Längserstreckungsachse verlaufen, wodurch die Anströmkante um die Blattspitze herumgezogen ist und auf der gleichen radialen Linie endet wie die Abströmkante. Auf diese Weise kann eine vergrößerte Aktuatorfläche bereitgestellt werden mit langem Hebelarm des Kräftemittelpunkts der durch die Aktuatoranordnung erzielbaren aerodynamischen Wirkung und somit stellt sich ein extrem starker Servo-Effekt.ein. Die Blattspitzenkante kann jedoch auch schräg zur Drehrichtung beziehungsweise Längserstreckungsrichtung verlaufen, wodurch sich die Tiefe des Rotorblattprofils in Richtung der Rotorblattspitze verkleinert und sich dadurch ein verteilter Blattspitzenwirbel einstellen kann.

Gemäß einer beispielhaften Ausführungsform der Erfindung weist die Anströmkante eine Neigung in Richtung der Drehrichtung auf.

Auf diese Weise kann der Strömungsstau radial nach innen abgeleitet werden und in einem Bereich das Rotorblattprofil umströmen, der radial weiter innen liegt. Auf diese Weise kann die Blattspitze entlastet werden. Die Abströmkante kann dabei ebenfalls in Richtung der Drehrichtung geneigt sein, wodurch sich beispielsweise eine konstante Tiefe des Rotorblattprofils bis hin in den Blattspitzenbereich einstellen kann. Jedoch kann die Abströmkante auch im Wesentlichen ungeneigt in Richtung der Längserstreckungsachse verlaufen, wodurch sich bei einer nach vorne gepfeilten Anströmkante eine vergrößerte Aktuatorfläche ergibt, da sich die Tiefe des Rotorblattprofils in Richtung der Blattspitze vergrößert. Eine Blattspitzenkante kann dabei sowohl in Richtung der Drehrichtung verlaufen, wodurch sich eine kontinuierliche Vergrößerung der Profiltiefe bis zum Blattspitzenbereich ergibt. Jedoch kann die Blattspitzenkante auch schräg zur Drehrichtung beziehungsweise der Längserstreckungsrichtung verlaufen, wodurch sich eine nach hinten gepfeilte Blattspitze in Kombination mit einer nach vorne gepfeilten Nase ergibt. Diese Ausführungsform stellt eine vergrößerte Fläche für einen Aktuator beziehungsweise eine Aktuatoranordnung bereit.

Gemäß einer beispielhaften Ausführungsform der Erfindung weist das Rotorblatt in einem Bereich vor der Schwerpunktachse im Bezug auf die Drehrichtung des Rotorblattes einen Raum auf für die Aufnahme einer Ausgleichsmasse.

Durch eine derartige Ausgleichsmasse können Unsymmetrien bedingt durch die gepfeilte Ausgestaltung der Blattspitze im Bereich der Anströmkante und/oder der Abströmkante kompensiert werden. Bei Hubschrauber-Rotorblättern muss aus rotordynamischen Stabilitätsgründen die Massenschwerpunktachse vor der elastischen Biege- und Torsionsachse liegen. Aufgrund der Integration einer Aktuatoranordnung im Bereich der Blattabströmkante verschiebt sich der lokale Massenschwerpunkt nach hinten, was zu Stabilitätsproblemen führen kann. Durch eine geeignete Ausgleichsmasse wird der lokale Massenschwerpunkt wieder vor die elastischen Achsen verschoben. Durch einen großen Abstand zwischen lokalem Massenschwerpunkt und aerodynamisch wirksamer Fläche der Aktuatoranordnung vergrößert sich außerdem die dynamische Wirksamkeit bezüglich Blatttorsion bzw.

Nickbewegung. Insbesondere bei einer Vorwärtspfeilung der Blattnase und einer Rückwärtspfeilung einer Blattspitzenkante ist die Anordnung eines Ausgleichsgewichtes bzw. eines Raumes für ein Ausgleichsgewicht von Bedeutung, da bei derartigen Fällen ein Gewichtsausgleich notwendig sein kann.

Gemäß einer beispielhaften Ausführungsform der Erfindung ist die Aktuatoranordnung ein Piezoaktuatorelement oder eine Anordnung aus Piezoaktuatorelementen.

Piezoaktuatorelemente lassen sich verhältnismäßig einfach durch elektrische Signale ansteuern, ohne das dafür Gelenke oder sonstige bewegliche Teile vorgesehen sein müssen. Ferner lassen sich Piezoelemente flach und kompakt herstellen.

Gemäß einer beispielhaften Ausführungsform der Erfindung ist ein Piezoaktuatorelement vom d33-Typ.

Derartige Piezoaktuatorelemente weisen eine wesentlich höhere Effizienz auf als Piezoelemente vom d31-Typ bei einer vergleichbaren Baugröße.

Gemäß einer beispielhaften Ausführungsform der Erfindung weist das Rotorblatt eine Applikationsfläche auf, wobei das Piezoaktuatorelement oder die Piezoaktuatorelemente auf der Applikationsfläche aufgebracht sind. Die Applikationsfläche kann sowohl außen am Rotorblatt als auch im Inneren des Rotorblattes liegen, beispielsweise in der Symmetriebene oder der Profilsehne.

Auf diese Weise kann durch die Betätigung des Piezoaktuatorelementes oder der Anordnung von Piezoaktuatorelementen die Applikationsfläche unmittelbar durch eine Ausübung von Scherkräften auf die Applikationsfläche verformt werden. Ähnlich eines Bimetalls wird die Krümmung der Applikationsfläche dabei verändert, wodurch sich eine geometrische Modifizierung der Applikationsfläche ergibt. Bei mehrschichtigen Piezoelementen erfolgt die Aufnahme der Scherkräfte im Inneren des Elementes und das Element verformt sich in sich. Das kann sowohl eine krümmende als auch eine tordierende Verformung sein.

Gemäß einer beispielhaften Ausführungsform der Erfindung ist wenigstens im Bereich des Piezoaktuatorelementes beziehungsweise der Piezoaktuatorelementanordnung die Applikationsfläche mit einer egalisierenden Schaumschicht bedeckt.

Auf diese Weise kann eine Piezoaktuatoranordnung vor äußeren Umwelteinflüssen geschützt werden und die Außenhaut der Applikationsfläche aerodynamisch ausgestalten werden, ohne das der Strömungsfluss durch die applizierten Piezoaktuatorelemente beeinträchtigt wird.

Gemäß einer beispielhaften Ausführungsform der Erfindung wird die egalisierende Schaumschicht mit einer Schutzschicht abgedeckt.

Auf diese Weise kann ein verhältnismäßig empfindlicher und weicher Schaum zum einen abgedichtet werden und mit einer harten und unempfindlichen Außenschale versehen werden, so dass sich die Geometrie der egalisierenden Schaumschicht im Wesentlichen nicht verändert.

Die einzelnen oben beschriebenen Merkmale können selbstverständlich auch untereinander kombiniert werden, wodurch sich zum Teil auch vorteilhafte Wirkungen einstellen können, die über die Summe der Einzelwirkungen hinausgehen.

Diese und andere Aspekte der vorliegenden Erfindung werden durch die Bezugnahme auf die hiernach beschriebenen beispielhaften Ausführungsformen erläutert und verdeutlicht.

### Kurze Beschreibung der Zeichnungen

Beispielhafte Ausführungsformen werden im Folgenden mit Bezugnahme auf die folgenden Zeichnungen beschrieben.
Figur 1 zeigt eine schematische Ansicht eines Helikopters mit einem Rotor.
Figur 2 zeigt eine nach hinten gepfeilte Rotorblattspitze gemäß einer beispielhaften Ausführungsform der Erfindung.
Figur 3 zeigt eine nach vorne gepfeilte Rotorblattspitze gemäß einer beispielhaften Ausführungsform der Erfindung.
Figur 4 zeigt eine Aufsicht auf eine nach hinten gepfeilte Rotorblattspitze gemäß einer beispielhaften Ausführungsform der Erfindung.
Figur 5 zeigt eine beispielhafte Ausführungsform einer nach vorne gepfeilten Rotorblattspitze.
Figur 6 zeigt unterschiedliche Ausführungsformen einer gepfeilten Rotorblattspitze.
Figur 7 zeigt den schematischen Aufbau eines applizierten Aktuators auf einer Applikationsfläche gemäß einer beispielhaften Ausführungsform der Erfindung.
Figur 8 zeigt eine beispielhafte Ausführungsform einer bereichsweise nach vorne und hinten gepfeilten Rotorblattspitze mit einem Raum für ein Ausgleichsgewicht.
Figur 9 zeigt einen schematischen Aufbau eines einschichtigen Piezoaktuators.
Figur 10 zeigt eine beispielhafte Ausführungsform eines zweischichtigen Piezoaktuators für einen Biege- bzw. Krümmungsmodus.
Figur 11 zeigt einen zweischichtigen Piezoaktuator für einen Torsionsmodus.

### Detaillierte Beschreibung beispielhafter Ausführungsformen

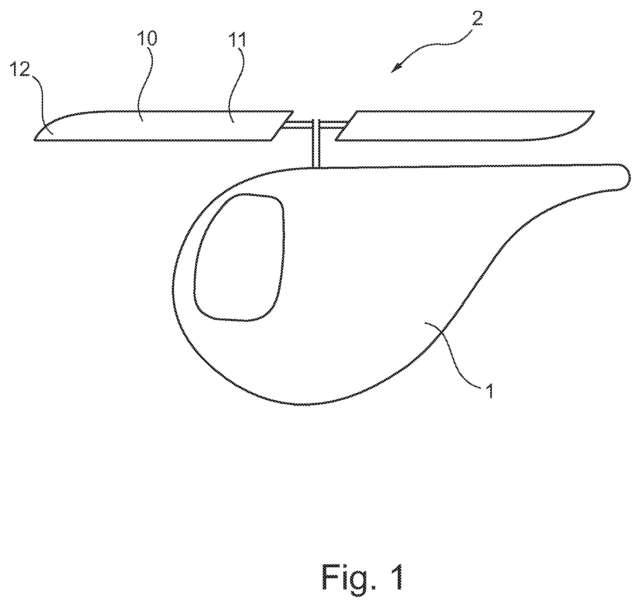

Figur 1 zeigt eine schematische Ansicht eines Helikopters 1 mit einem Rotor 2. Der Rotor weist eine Mehrzahl von Rotorblättern 10 auf, wobei die Rotorblätter an einer Seite einer Rotorblattwurzel 11 an dem Rotor 2 befestigt sind. Auf der der Wurzel 11 gegenüberliegenden Seite des Rotorblattes 10 liegt die Rotorblattspitze 12.

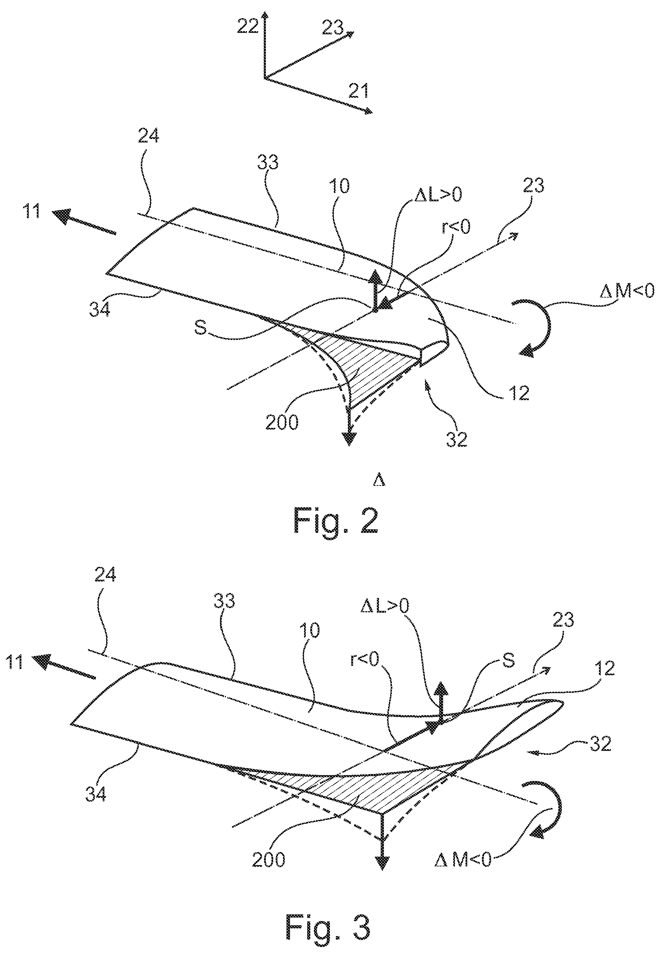

Figur 2 zeigt eine beispielhafte Ausführungsform einer gepfeilten Rotorblattspitze. Die in Figur 2 gezeigte Rotorblattspitze weist eine Pfeilung nach hinten auf, so dass der Kräftemittelpunkts der aerodynamischen Wirkung der Aktuatoranordnung S bezüglich der Drehrichtung 23 nach hinten verschoben wird, so dass sich ein r<0 ergibt. Für die nach hinten gerichtete Pfeilung ist die Anströmkante 33 entgegen der Drehrichtung 23 geneigt. In der in Figur 2 gezeigten Ausführungsform ist auch die Abströmkante 34 entgegen der Drehrichtung 23 geneigt. Im Bereich der Abströmkante 34 ist ein Bereich für eine Aktuatoranordnung 200 vorgesehen, der hier, wie auch in allen weiteren Figuren, im Wesentlichen ohne Füllmaterial dargestellt ist. Das Füllmaterial füllt die scharfen Kanten, Absätze und die Übergänge aus, so dass sich ein strömungsoptimiertes Profil ergibt. Die Anströmkante 33 und die Abströmkante 34 werden durch eine Blattspitzenkante 32 verbunden. Durch die Verschiebung des Kräftemittelpunkts der aerodynamischen Wirkung der Aktuatoranordnung S von einer Schwerpunkachse 24 nach hinten ergibt sich bei einer Auslenkung des Bereiches an der Abströmkante durch die Aktuatoranordnung 200 ein ΔL>0, so dass sich ein ΔM<0 um die Schwerpunktachse 24 ergibt. Die Anströmkante 33 sowie die Abströmkante 34 verlaufen in dem nicht geneigten Bereich im Wesentlichen in eine Längserstreckungsrichtung 21. Die Auslenkung des Bereiches an der Abströmkante erfolgt im Wesentlichen in eine vertikale Richtung 22. Durch sich das einstellende ΔL>0 ergibt sich ein erhöhter Servo-Effekt.

Figur 3 zeigt eine analoge Anordnung mit einer nach vorne gepfeilten Rotorblattspitze, bei der die Anströmkante 33 in Richtung einer Drehrichtung 23 geneigt ist. Dadurch verschiebt sich der Kräftemittelpunkts der aerodynamischen Wirkung der Aktuatoranordnung S von der Schwerpunktachse 24 in Richtung der Drehrichtung 23. Durch eine Auslenkung des Bereiches an der Abströmkante 34 durch die Piezoanordnung 200 ergibt sich ein ΔL>0, das jedoch jetzt vor der Schwerpunkachse 24 liegt. Das sich einstellende Moment ΔM ist kleiner 0. Die in Figur 3 gezeigte Anordnung führt zu einem Direct-Lift-Effekt, der durch die Vorwärtspfeilung hervorgerufen wird. In der in Figur 3 gezeigten Ausführungsform verläuft die Abströmkante 34 im Wesentlichen gerade, d.h. nicht geneigt. Jedoch ist es auch möglich, dass die Abströmkante 34 in Richtung der Drehrichtung 23 geneigt ist, wodurch sich eine geänderte Geometrie der Rotorblattspitze ergibt, wie im Folgenden noch beschrieben wird.

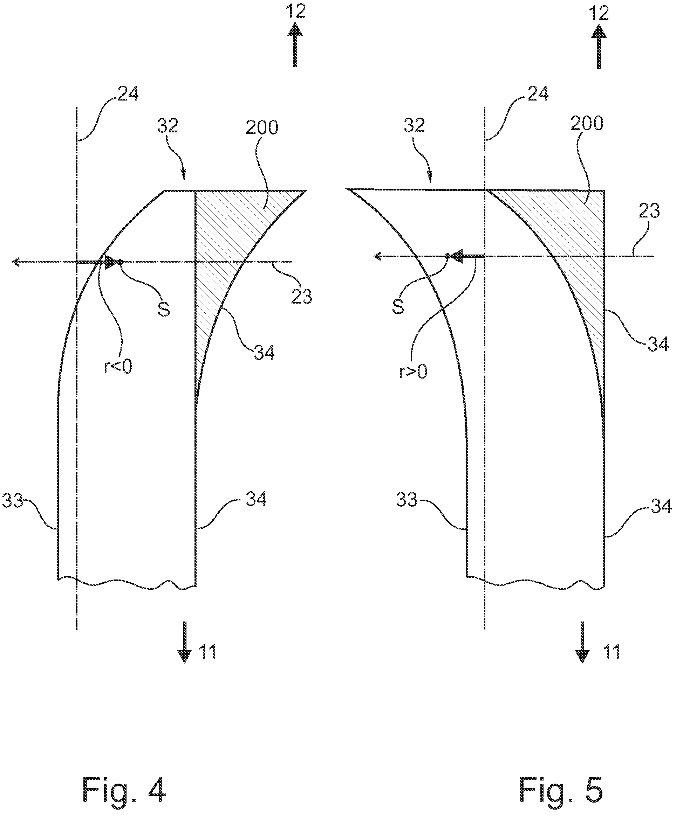

Figur 4 zeigt eine Aufsicht der in Figur 2 gezeigten perspektivischen Ansicht einer Rotorblattspitze, die nach hinten gepfeilt ist. Auch in Figur 4 ist zu sehen, dass sich der Kräftemittelpunkts der aerodynamischen Wirkung der Aktuatoranordnung S im Bereich der rückwärtigen Pfeilung hinter die Schwerpunktachse 24 verlagert, wodurch sich ein r<0 ergibt.

Figur 5 zeigt ebenfalls eine Aufsicht auf eine Rotorblattspitze. Die in Figur 5 gezeigte Aufsicht entspricht der Aufsicht auf die perspektivische Darstellung der Figur 3. In der in Figur 5 gezeigten Anordnung wird der Kräftemittelpunkts der aerodynamischen Wirkung der Aktuatoranordnung S durch die Vorpfeilung vor die Schwerpunktachse 24 verlagert, wodurch sich ein r>0 ergibt. Der Bereich an der Abströmkante 34, der mit einer Aktuatoranordnung versehen ist, führt zu einem entsprechenden Auftrieb beziehungsweise Abtrieb der Rotorblattspitze, je nachdem, ob die geometrische Verformung ein Auftrieb förderndes oder Abtrieb förderndes Profil annimmt.

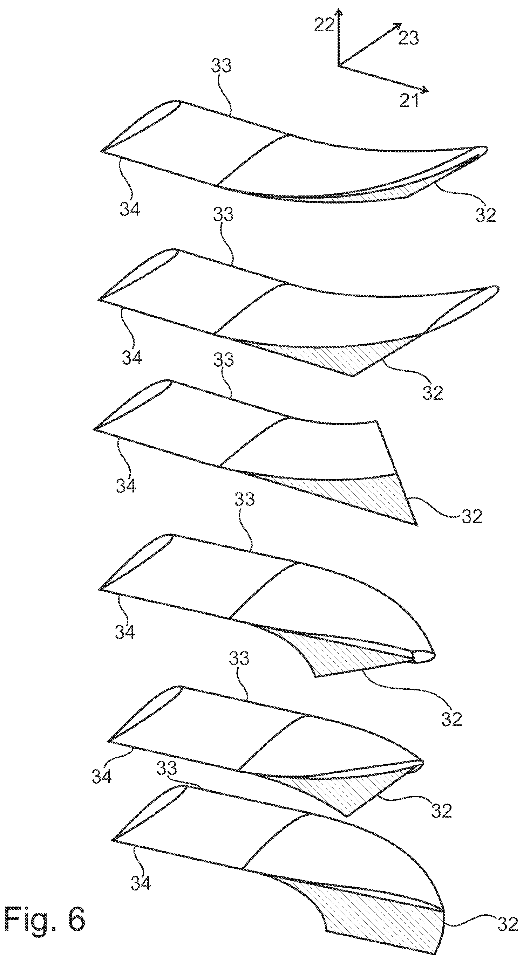

Figur 6 zeigt sechs unterschiedliche Ausgestaltungen eines gepfeilten Blattspitzenprofils. Dabei sind die oberen zwei Ausführungen als vorwärtig gepfeilte Blattspitze ausgestaltet, die dritte Ausführung als eine bereichsweise kombinierte vorwärts und rückwärts gepfeilte Blattspitze und die unteren drei Ausführungsformen als rückwärts gepfeilte Blattspitzen ausgebildet. Dabei zeigt die erste Ausführungsform eine in Drehrichtung 23 geneigte Abströmkante 34, so dass in der hier gezeigten Ausführungsform die Tiefe des Flügelprofils im Wesentlichen konstant bleibt bis zur Rotorblattspitze. Wird die Abströmkante 34 nicht geneigt, so wie in der zweiten Ausführungsform der Figur 6, so erhöht sich die Profiltiefe bis zur Rotorblattspitze. Dadurch ergibt sich eine vergrößerte Fläche zur Applikation für eine Aktuatoranordnung. Die dritte Ausführungsform zeigt ebenfalls eine gerade verlaufende Abströmkante, wobei jedoch die die Anströmkante 33 und die Abströmkante 34 verbindende Blattspitzenkante 32 schräg verläuft, so dass die Blattspitzennase zwar nach vorne gepfeilt ist, jedoch die Blattspitzenkante 32 nach hinten gepfeilt ist. Auch in dieser Ausführungsform ergibt sich eine vergrößerte Applikationsfläche für eine Aktuatoranordnung. Die vierte Ausführungsform zeigt eine nach hinten geneigte Anströmkante 33, bei der auch die Abströmkante 34 nach hinten, d.h. entgegen der Drehrichtung geneigt ist. Die die Anströmkante 33 und die Abströmkante 34 verbindende Blattspitzenkante 32 ist in der hier gezeigten Ausführungsform schräg gestellt, so dass die Profiltiefe der Rotorblattspitze zunächst konstant bleibt, sich jedoch bei einem Übergang von der Abströmkante 34 zu der Blattspitzenkante 32 allmählich verjüngt.

In der fünften Ausführungsform ist die Abströmkante 34 ebenfalls entgegen der Drehrichtung geneigt, wobei die Blattspitzenkante 32 parallel zur Drehrichtung verläuft. Die Profiltiefe ist über die gesamte Blattspitze konstant. Der nicht durch eine Aktuatoranordnung belegte Bereich verjüngt sich zu der Blattspitze, während der für eine Aktuatoranordnung vorgesehene Bereich in Richtung der Blattspitze zunimmt. In der sechsten Ausführungsform verläuft die Anströmkante 33 derart um die Blattspitze herum, dass sie bezüglich der Drehrichtung 23 auf der gleichen Höhe endet wie die Abströmkante 34. Auf diese Weise verläuft die Blattspitzenkante 32 im Wesentlichen in radiale Richtung. Auf diese Weise ergibt sich eine verhältnismäßig große Fläche zur Applikation einer Aktuatoranordnung an der Rotorblattspitze.

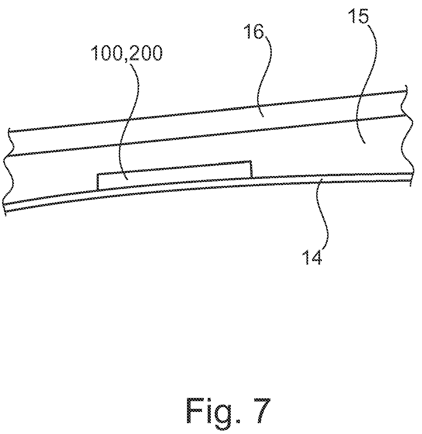

Figur 7 zeigt eine schematische Schnittansicht eines applizierten Aktuators 100 beziehungsweise eine Aktuatoranordnung 200 auf einer Applikationsfläche 14. Der Aktuator beziehungsweise die Aktuatoranordnung werden in der hier gezeigten Ausführungsform mit einem egalisierenden Schaum 15 abgedeckt, der dafür sorgt, dass die äußere Begrenzung ein strömungsoptimiertes Profil annimmt. Auf diese Weise kann verhindert werden, dass an den applizierten Aktuatoren Turbulenzen auftreten, die das Strömungsverhalten des Rotorblattes empfindlich stören können, insbesondere im Bereich der Blattspitze, die im Regelfall den höchsten aerodynamischen Belastungen ausgesetzt ist. Der egalisierende Schaum 15 kann dabei mit einer Abdeckschicht 16 abgedeckt sein, die zum einem eine Abdichtung des Schaums 15 gewährleistet und zum anderen eine formstabile und resistente Abdeckung darstellt. Auf diese Weise können die Aktuatoren beziehungsweise die Aktuatoranordnung im Wesentlichen ohne strömungsstörende Einflüsse auf der Applikationsfläche 14 appliziert werden. An dieser Stelle sei verstanden, dass sich die in Figur 7 gezeigte Anordnung sowohl auf eine Applizierung auf einer Applikationsfläche im Inneren des Rotorblattes als auch auf der Oberseite eines Rotorblattes als auch auf die Applizierung auf einer Unterseite eines Rotorblattes bezieht.

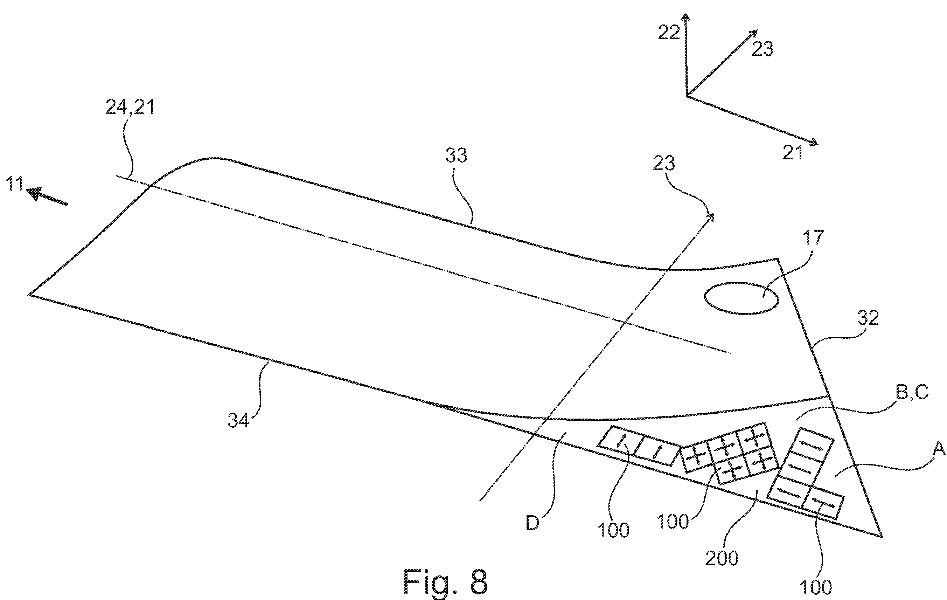

Figur 8 zeigt eine beispielhafte Ausführungsform einer Rotorblattspitze. In der in Figur 8 gezeigten Ausführungsform ist die Anströmkante 33 in Richtung der Drehrichtung 23 geneigt. Auf diese Weise verschiebt sich der Schwerpunkt vor die Schwerpunktachse 24. Durch die Rückwärtspfeilung der Blattspitzenkante 32 ergibt sich ein vergrößerter Bereich, in dem eine Aktuatoranordnung 200 appliziert werden kann. Durch die überwiegend gerade Abströmkante liegt die Aktuatoranordnung mit einem großen Hebelarm hinter den elastischen Biege- bzw. Torsionsachsen und kann somit ein großes aerodynamisches Nickmoment erzeugen.

In der Blattnase im Bereich zwischen nach vorne und nach hinten gepfeilter Anstömkante kann eine Ausgleichsmasse 17 angebracht sein, um die hinter der elastischen Biege- bzw. Torsionsachse angebrachte Aktuatoranordnung und die daraus resultierende lokale Massenschwerpunktverschiebung auszugleichen.

Die in Figur 8 gezeigt Aktuatoranordnung besteht aus einer Vielzahl von Einzelaktuatoren. Dabei befinden sich in einem Bereich A, der sich in der Nähe der Rotorblattspitze befindet, Aktuatoren, die eine Längenänderung in Richtung der Längserstreckungsachse 21 beziehungsweise der Schwerpunktachse 24 vollziehen. Dadurch ergibt sich eine Krümmung der Rotorblattspitze in vertikale Richtung 22. In einem weiter zur Rotorblattwurzel 11 liegenden Bereich D sind ebenfalls Aktuatoren 100 angeordnet, deren Längenänderung jedoch im Wesentlichen in Richtung der Drehrichtung 23 erfolgt. Auf diese Weise wird ebenfalls eine Verformung in Form einer Krümmung in vertikaler Richtung erzeugt. Während die Verformung im Bereich A bezüglich der Längserstreckungsachse 21 erfolgt, erfolgt die Verformung im Bereich D im Wesentlichen bezüglich der Drehrichtung 23. Sowohl im Bereich A als auch im Bereich D erfolgt die Verformung in Form einer Krümmung. Es sei verstanden, dass die Aktuatoren sowohl einschichtig als auch mehrschichtig ausgestaltet sein können. Die einschichtigen Aktuatoren übertragen die Scherkräfte auf die Applikationsfläche und rufen im Zusammenspiel mit der Applikationsfläche eine Krümmung hervor. Mehrschichtige Aktuatoren nehmen die Scherkräfte im Inneren Auf und vollziehen bereits an sich eine Krümmung, die dann auf die Applikationsoberfläche übertragen werden kann.

In dem zwischen den Bereichen A und D liegenden Bereich B, C sind ebenfalls Aktuatoren angeordnet, die einen Übergangsbereich zwischen dem Bereich A und dem Bereich D abdecken. Um einen Übergang zwischen den unterschiedlichen Krümmungsbereichen darzustellen, ist der Übergangsbereich B, C mit Aktuatoren belegt, die zwei Längenänderungsrichtungen aufweisen, die quer zueinander laufen. Auf diese Weise vollziehen die Aktuatoren 100 im Bereich B, C eine Torsionsbewegung, die einen Übergang zwischen der reinen Krümmungsbewegung bezüglich der Drehrichtung 23 im Bereich D und einer reinen Krümmung bezüglich der Längserstreckungsrichtung 21 im Bereich A herstellen.

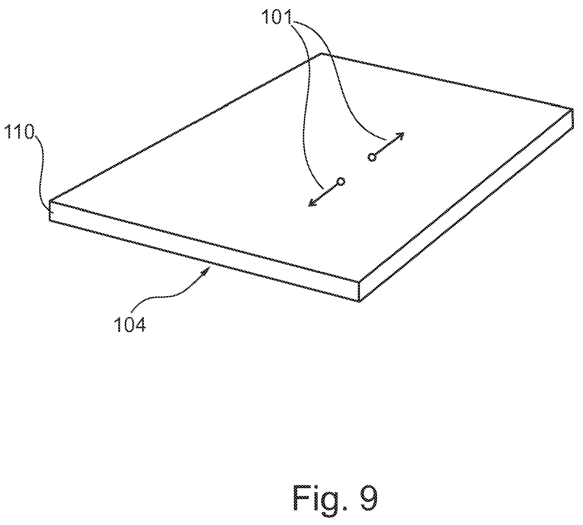

Die Funktionsweise der Aktuatoren in den unterschiedlichen Bereichen wird nun mit Bezug auf die Figuren 9 bis 11 näher beschrieben.

Figur 9 zeigt eine beispielhafte Ausführungsform eines Aktuators 100 in einer rudimentären Form. Der Aktuator besteht aus einer ersten Schicht 110, die in eine erste Richtung 101 verformbar ist. Ferner weist der Aktuator eine Oberfläche 104 auf, mittels derer der Aktuator 100 auf einer Applikationsfläche appliziert werden kann. Ein derartiger in Figur 2 gezeigter Aktuator führt in einem nicht applizierten Zustand lediglich zu einer Längenänderung 101. Erst in einem applizierten Zustand führt die Betätigung des Aktuators zu einer Verwölbung bzw. Verbiegung, insbesondere wenn die Oberfläche, auf der der Aktuator appliziert wird, eine gewisse Verformbarkeit aufweist, jedoch eine ausreichende Festigkeit, um den entstehenden Schubkräften entgegenzuwirken. Die Aktuatoren können beispielsweise als Piezoaktuatoren ausgeführt sein. Vorzugsweise wird dabei der d33-Effekt in der ersten Richtung ausgenutzt. Die Aktuatoren können als sogenannte Stack-Aktuatoren oder mit interdigitalen Elektroden (interdigitated electrodes, IDE) mehrschichtig und auch monolitisch ausgeführt sein.

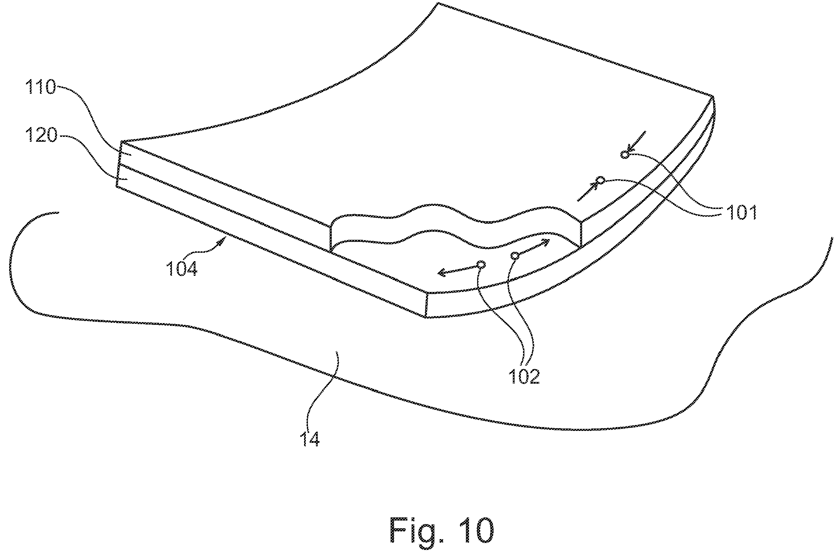

Figur 10 zeigt eine beispielhafte Ausführungsform eines zweischichtigen Aktuators mit einer ersten aktiven Schicht 110 sowie einer zweiten aktiven Schicht 120. Der Aktuator 100 ist mit einer entsprechenden Oberfläche 104 auf der Applikationsfläche 14 aufgebracht und befestigt. Die Verformungsrichtungen 101, 102 sind in der in Figur 10 gezeigten Ausführungsform antiparallel zueinander, so dass sich eine verstärkte Verformung bzw. Krümmung um eine Krümmungsachse einstellt, wenn die erste aktive Schicht 110 bzw. die zweite aktive Schicht 120 parallel betätigt werden.

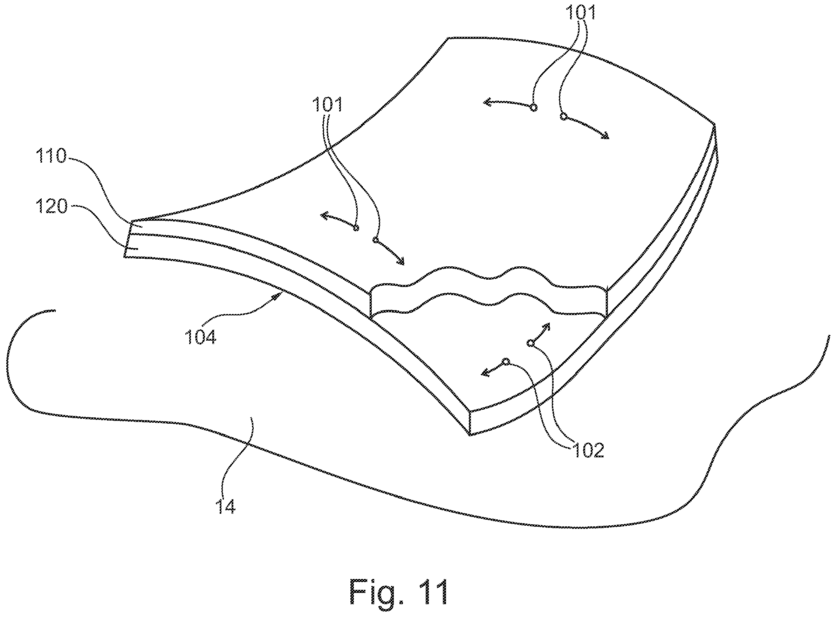

Die in Figur 11 gezeigte Ausführungsform zeigt ebenfalls einen Rotorblattaktuator mit zwei aktiven Schichten. Die beiden aktiven Schichten weisen jedoch Betätigungsrichtungen 101, 102 auf, die voneinander verschieden sind, und bei einer Betätigung der Aktuatorschichten aufgrund Schubverformung zu einer zweidimensionalen Verwölbung bzw. tordierenden Krümmung führt.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Rotorblatt für einen Helikopter mit
einer Blattwurzel (11)
einem Blattspitzenbereich (12),
einer Anströmkante (33), und
einer Abströmkante (34),
wobei sich im Blattspitzenbereich die Anströmkante zu einer Drehrichtung (23) zugewandt und die Abströmkante von der Drehrichtung abgewandt befindet,
wobei die Anströmkante im Blattspitzenbereich eine Neigung zu einer Längserstreckungsrichtung (21) des Rotorblattes (10) bezüglich der Drehrichtung aufweist,
wobei in einem Bereich an der Abströmkante (34) im Blattspitzenbereich eine Aktuatoranordnung (200) angeordnet ist, die ausgelegt ist, um den Blattspitzenbereich in einem Bereich der Abströmkante geometrisch zu verformen, **dadurch gekennzeichnet, dass** die Aktuatoranordnung (200) aufweist:
einen ersten Aktuator (100) in einem im Bereich der Rotorblattspitze (12) liegenden ersten Bereich (A), wobei eine Längenänderungsrichtung (101) des ersten Aktuators im Wesentlichen in die Längserstreckungsrichtung (21) verläuft,
einen zweiten Aktuator (100) in einem bezüglich des ersten Bereiches in Richtung einer Rotorblattwurzel (11) liegenden zweiten Bereich (D), wobei eine Längenänderungsrichtung (101) des zweiten Aktuators im Wesentlichen in eine Richtung quer zur Längserstreckungsrichtung (21) in einer Drehebene verläuft, und
einen dritten Aktuator (100) in einem zwischen dem ersten Bereich (A) und dem zweiten Bereich (D) liegenden dritten Bereich (B, C) mit zwei quer zueinander liegenden geschichteten Längenänderungsrichtungen (101, 102).

2. Rotorblatt gemäß Anspruch 1, wobei die Aktuatoranordnung (100) ausgelegt ist, um einen Bereich an der Abströmkante (34) von einer ersten Position in eine zweite Position vertikal (22) bzw. orthogonal zu sowohl der Längserstreckungsrichtung (21) als auch der Drehrichtung (23) zu bewegen.

3. Rotorblatt gemäß einem der Ansprüche 1 und 2, wobei die Neigung der Anströmkante (33) im Bereich der Blattspitze (12) eine gepfeilte Nase der Blattspitze darstellt.

4. Rotorblatt gemäß einem der Ansprüche 1 bis 3, wobei die Anströmkante (33) eine Neigung entgegen der Drehrichtung (23) derart aufweist, dass die Anströmkante nach vorne gepfeilt ist.

5. Rotorblatt gemäß einem der Ansprüche 1 bis 3, wobei die Anströmkante (33) eine Neigung in Richtung der Drehrichtung (23) derart aufweist, dass die Anströmkante nach hinten gepfeilt ist.

6. Rotorblatt gemäß einem der Ansprüche 1 bis 5, wobei die Abströmkante (34) eine Neigung entgegen der Drehrichtung (23) aufweist.

7. Rotorblatt gemäß einem der Ansprüche 1 bis 6, wobei die Abströmkante (34) eine Neigung in Richtung der Drehrichtung (23) aufweist.

8. Rotorblatt gemäß einem der Ansprüche 1 bis 7, wobei das Rotorblatt einen vor einer Schwerpunktachse (24) des Rotorblattes (10) liegenden Raum (17) für eine Ausgleichsmasse aufweist, um eine Masse der Aktuatoranordnung (200) gegenüber einer Schwerpunktachse (24) zu balancieren.

9. Rotorblatt gemäß einem der Ansprüche 1 bis 8, wobei das Rotorblatt (10) im Blattspitzenbereich (12) eine die Anströmkante (33) und die Abströmkante (34) verbindende Blattspitzenkante (32) aufweist, wobei die Blattspitzenkante nach hinten gepfeilt ist.

10. Rotorblatt gemäß einem der Ansprüche 1 bis 9, wobei die Aktuatoranordnung (200) ein Piezoaktuatorelement ist.

11. Rotorblatt gemäß Anspruch 10, wobei das Piezoaktuatorelement vom d33-Typ ist.

12. Rotorblatt gemäß einem der Ansprüche 10 und 11, wobei das Rotorblatt (10) eine Applikationsfläche (14) aufweist und das Piezoaktuatorelement auf der Applikationsfläche appliziert ist.

13. Rotorblatt gemäß Anspruch 12, wobei die Applikationsfläche (14) wenigstens im Bereich des Piezoaktuatorelementes mit einer egalisierenden Schaumschicht (15) bedeckt ist.

14. Rotorblatt gemäß Anspruch 13, wobei die egalisierende Schaumschicht (15) mit einer Schutzschicht (16) abgedeckt ist.

## Claims

1. Rotor blade for a helicopter, comprising:
a blade root (11),
a blade tip region (12),
a leading edge (33), and
a trailing edge (34),
wherein, in the blade tip region, the leading edge faces towards a rotational direction (23) and the trailing edge faces away from the rotational direction,
wherein the leading edge in the blade tip region is inclined in relation to a longitudinal extension direction (21) of the rotor blade (10) with respect to the rotational direction,
wherein, in a region at the trailing edge (34) in the blade tip region, an actuator arrangement (200) is disposed which is designed to geometrically deform the blade tip region in a region of the trailing edge, **characterised in that** the actuator arrangement (200) comprises:
a first actuator (100) in a first region (A) lying in the region of the rotor blade tip (12), wherein a length changing direction (101) of the first actuator extends substantially in the longitudinal extension direction (21),
a second actuator (100) in a second region (D) lying in the direction of a rotor blade root (11) with respect to the first region, wherein a length changing direction (101) of the second actuator extends substantially in a direction transverse to the longitudinal extension direction (21) in a rotational plane, and
a third actuator (100) in a third region (B, C) lying between the first region (A) and the second region (D) and having two stratified length changing directions (101, 102) which lie transversely with respect to one another.

2. Rotor blade as claimed in claim 1, wherein the actuator arrangement (100) is designed to move a region at the trailing edge (34) from a first position to a second position vertically (22) or orthogonally to both the longitudinal extension direction (21) and also to the rotational direction (23).

3. Rotor blade as claimed in any one of claims 1 and 2, wherein the inclination of the leading edge (33) in the region of the blade tip (12) constitutes a backswept nose of the blade tip.

4. Rotor blade as claimed in any one of claims 1 to 3, wherein the leading edge (33) is inclined oppositely to the rotational direction (23) such that the leading edge is backswept forwards.

5. Rotor blade as claimed in any one of claims 1 to 3, wherein the leading edge (33) is inclined in the direction of the rotational direction (23) such that the leading edge is backswept backwards.

6. Rotor blade as claimed in any one of claims 1 to 5, wherein the trailing edge (34) is inclined oppositely to the rotational direction (23).

7. Rotor blade as claimed in any one of claims 1 to 6, wherein the trailing edge (34) is inclined in the direction of the rotational direction (23).

8. Rotor blade as claimed in any one of claims 1 to 7, wherein the rotor blade comprises a chamber (17), lying upstream of an axis of gravity (24) of the rotor blade (10), for a compensating mass in order to balance out a mass of the actuator arrangement (200) with respect to an axis of gravity (24).

9. Rotor blade as claimed in any one of claims 1 to 8, wherein the rotor blade (10) in the blade tip region (12) comprises a blade tip edge (32) connecting the leading edge (33) and the trailing edge (34), wherein the blade tip edge is backswept backwards.

10. Rotor blade as claimed in any one of claims 1 to 9, wherein the actuator arrangement (200) is a piezo actuator element.

11. Rotor blade as claimed in claim 10, wherein the piezo actuator element is of the d33 type.

12. Rotor blade as claimed in any one of claims 10 and 11, wherein the rotor blade (10) comprises an application surface (14) and the piezo actuator element is applied to the application surface.

13. Rotor blade as claimed in claim 12, wherein the application surface (14) is covered, at least in the region of the piezo actuator element, with a levelling foam layer (15).

14. Rotor blade as claimed in claim 13, wherein the levelling foam layer (15) is covered with a protective layer (16).

## Revendications

1. Pale de rotor pour un hélicoptère, comportait
une racine de pale (11)
une zone de pointe de pale (12),
un bord d'écoulement entrant (33), et
un bord d'écoulement sortant (34),
dans laquelle, dans la zone de pointe de pale, le bord d'écoulement entrant se trouve orienté vers un sens de rotation (23) et le bord d'écoulement sortant se trouve opposé au sens de rotation,
dans laquelle le bord d'écoulement entrant présente, dans la zone de pointe de pale, une inclinaison vers une direction dans le sens de la longueur (21) de la pale de rotor (10) par rapport au sens de rotation,
dans laquelle, dans une zone au niveau du bord d'écoulement sortant (34), dans la zone de pointe de pale, est disposé un moyen actionneur (200) qui est conçu pour déformer géométriquement la zone de pointe de pale dans une zone du bord d'écoulement sortant,
**caractérisé en ce que**
le moyen actionneur (200) présente :
un premier actionneur (100) dans une première zone (A) située au niveau de la pointe de pale de rotor (12), une direction de changement de longueur (101) du premier actionneur s'étendant sensiblement dans la direction dans le sens de la longueur (21),
un deuxième actionneur (100) dans une deuxième zone (D) située dans la direction d'une racine de pale de rotor (11) par rapport à la première zone, une direction de changement de longueur (101) du deuxième actionneur s'étendant dans un plan de rotation sensiblement dans une direction transversale à la direction dans le sens de la longueur (21), et
un troisième actionneur (100) dans une troisième zone (B, C) située entre la première zone (A) et la deuxième zone (D) avec deux directions de changement de longueur (101, 102) disposées par couches transversalement les unes par rapport aux autres.

2. Pale de rotor selon la revendication 1, dans laquelle le moyen actionneur (100) est conçu pour déplacer une zone au niveau du bord d'écoulement sortant (34) d'une première position dans une deuxième position verticalement (22) respectivement orthogonalement, aussi bien par rapport à la direction dans le sens de la longueur (21) que par rapport au sens de rotation (23).

3. Pale de rotor selon une des revendications 1 et 2, dans laquelle l'inclinaison du bord d'écoulement entrant (33) au niveau de la pointe de pale (12) représente un nez en flèche de la pointe de pale.

4. Pale de rotor selon une des revendications 1 à 3, dans laquelle le bord d'écoulement entrant (33) présente une inclinaison allant contre le sens de rotation (23) de telle sorte que le bord d'écoulement entrant est en flèche vers l'avant.

5. Pale de rotor selon une des revendications 1 à 3, dans laquelle le bord d'écoulement entrant (33) présente une inclinaison dans la direction du sens de rotation (23) de telle sorte que le bord d'écoulement entrant est en flèche vers l'arrière.

6. Pale de rotor selon une des revendications 1 à 5, dans laquelle le bord d'écoulement sortant (34) présente une inclinaison allant contre le sens de rotation (23).

7. Pale de rotor selon une des revendications 1 à 6, dans laquelle le bord d'écoulement sortant (34) présente une inclinaison dans la direction du sens de rotation (23).

8. Pale de rotor selon une des revendications 1 à 7, dans laquelle la pale de rotor présente un espace (17) pour une masse de compensation qui est situé devant un axe de centre de gravité (24) de la pale de rotor (10) afin d'équilibrer une masse du moyen actionneur (200) par rapport à un axe de centre de gravité (24).

9. Pale de rotor selon une des revendications 1 à 8, dans laquelle la pale de rotor (10) présente dans la zone de pointe de pale (12) un bord de pointe de pale (32) reliant le bord d'écoulement entrant (33) et le bord d'écoulement sortant (34), le bord de pointe de pale étant en flèche vers l'arrière.

10. Pale de rotor selon une des revendications 1 à 9, dans laquelle le moyen actionneur (200) est un élément d'actionneur piézoélectrique.

11. Pale de rotor selon la revendication 10, dans laquelle l'élément d'actionneur piézoélectrique est du type d33.

12. Pale de rotor selon une des revendications 10 et 11, dans laquelle la pale de rotor (10) présente une surface d'application (14) et l'élément d'actionneur piézoélectrique est appliqué sur la surface d'application.

13. Pale de rotor selon la revendication 12, dans laquelle la surface d'application (14) est couverte d'une couche de mousse égalisatrice (15) au moins au niveau de l'élément d'actionneur piézoélectrique.

14. Pale de rotor selon la revendication 13, dans laquelle la couche de mousse égalisatrice (15) est recouverte d'une couche de protection (16).
